# EUROPEAN PATENT SPECIFICATION

(11) **EP 2 574 967 B1**
(45) Date of publication and mention of the grant of the patent: **15.05.2019**
(21) Application number: 11191495.8
(22) Date of filing: 01.12.2011
(51) Int. Cl.: G02B 5/20, B82Y 20/00, G02B 27/10, H04N 9/31, H05B 33/00, G02B 26/00

(54) **Image generating device with improved illumination efficiency**
Bilderzeugungsvorrichtung mit verbesserter Beleuchtungseffizienz
Dispositif de génération d'images avec efficacité d'éclairage améliorée

(30) Priority: 29.09.2011 TW 100135214
(43) Date of publication of application: 03.04.2013
(73) Proprietor: Acer Incorporated, New Taipei City 221 (TW)
(72) Inventor: Ko, Chueh-Pin, 221 New Taipei City (TW)
(74) Representative: Becker Kurig Straus

(56) References cited:
- WO-A1-2011/060619
- US-A1- 2009 034 284
- US-A1- 2011 051 102

## Description

### Field of the Invention

The present invention is related to an image generating device utilizing quantum dots for improving illumination efficiency according to the pre-characterizing clauses of claims 1 and 7.

### Background of the Invention

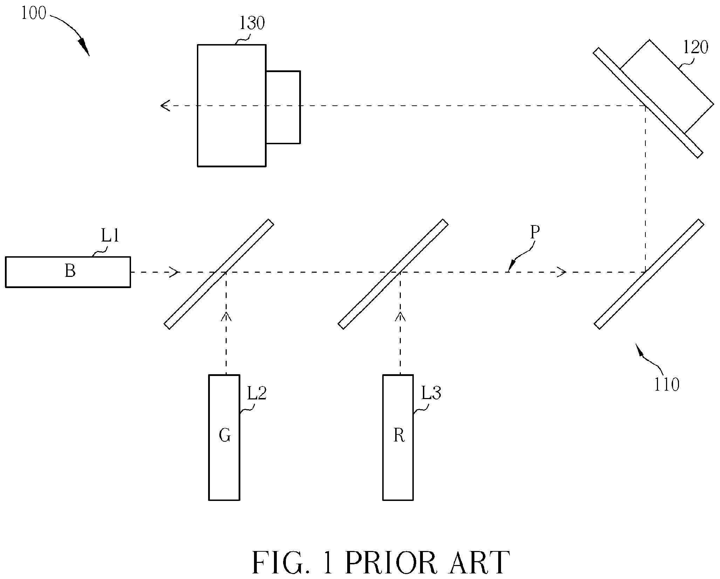

Please refer to FIG. 1. FIG. 1 is a diagram showing a solid-state lighting projector 100 of the prior art. As shown in FIG. 1, the solid-state lighting projector 100 comprises a first solid-state light source L1, a second solid-state light source L2, a third solid-state light source L3, an optical module 110, an image generating element 120, and a projection module 130. The first solid-state light source L1 is for generating light with a first wavelength, such as blue (B) light. The second solid-state light source L2 is for generating light with a second wavelength, such as green (G) light. The third solid-state light source L3 is for generating light with a third wavelength, such as red (R) light. The first solid-state light source L1, the second solid-state light source L2, and the third solid-state light source L3 generate blue light, green light, and red light respectively according to a predetermined time sequence. The optical module 110 is for guiding the blue light, the green light, and the red light generated by the first solid-state light source L1, the second solid-state light source L2, and the third solid-state light source L3 respectively to the image generating element 120. The image generating element 120 then generates red images, green images, and blue images according to the red light, the green light, and the blue light transmitted from the optical module 110 respectively. The projection module 130 projects the red images, the green images and the blue images generated by the image generating element 120 onto a screen for forming complete images. The image generating element 120 is generally a digital micromirror device (DMD). The digital micromirror device comprises an array of micromirrors for reflecting the light to generate images according to image data.

Solid state light sources for image generating devices are for example known from US20090034284A1, US20110051102A1 or WO2011060619A1.

However, according to the above arrangement, when one solid-state light source generates light, the other two solid-state light sources need to be turned off, such that the turned off solid-state light sources are not able to be utilized for generating images. Therefore, the solid-state light sources of the projector of the prior art are not utilized efficiently.

### Summary of the Invention

This in mind, the present invention aims at providing an image generating device utilizing quantum dots for improving illumination efficiency.

This is achieved by an image generating device according to claim 1. The dependent claims pertain to corresponding further developments and improvements.

As will be seen more clearly from the detailed description following below, the claimed image generating device with improved illumination efficiency includes a first light source, a light conversion element, and an image generating element. The first light source is for generating light with a first wavelength. The light conversion element is disposed on a light path of the light with the first wavelength. The light conversion element comprises a first quantum dot layer for converting light with wavelengths under a second wavelength to light with the second wavelength, and a second quantum dot layer for converting light with wavelengths under a third wavelength to light with the third wavelength. The first wavelength is smaller than the second wavelength, and the second wavelength is smaller than the third wavelength. The image generating element is for generating images according to light transmitted from the light conversion element.

As will be seen more clearly from the detailed description following below, the claimed image generating device with improved illumination efficiency includes a first light source, a second light source, a light conversion element, and an image generating element. The first light source is for generating light with a first wavelength. The second light source is for generating light with a second wavelength. The light conversion element is disposed on a light path of the light with the first wavelength and/or the second wavelength. The light conversion element comprises a first quantum dot layer for converting light with wavelengths under a third wavelength to light with the third wavelength. The first wavelength and/or the second wavelength are smaller than the third wavelength. The image generating element is for generating images according to light transmitted from the light conversion element.

### Brief Description of the Drawings

In the following, the invention is further illustrated by way of example, taking reference to the accompanying drawings. Thereof
FIG. 1 is a diagram showing a solid-state lighting projector of the prior art,
FIG. 2 is a diagram showing a first embodiment of a projector of the present invention,
FIG. 3 is a diagram showing a first embodiment of a light conversion element,
FIG. 4 is a diagram showing a second embodiment of the light conversion element,
FIG. 5 is a diagram showing a second embodiment of the projector of the present invention,
FIG. 6 is a diagram showing a third embodiment of the projector of the present invention, and
FIG. 7 is a diagram showing a third embodiment of the light conversion element.

### Detailed Description

The quantum dot is a nanoscale semiconductor material, which can be an element of semiconductor material (such as Si, Ge), or a compound of semiconductor material (such as CdSe or CdS) . A particle diameter of the quantum dot is less than 100 nanometers. The quantum dot can absorb light with wavelengths below a predetermined wavelength according to the particle size, and convert the light with wavelengths below the predetermined wavelength to light with the predetermined wavelength. For example, when the particle diameter of a CdSe quantum dot is 2.1 nanometers, the CdSe quantum dot absorbs light with wavelengths below a blue light wavelength, and converts the light with wavelengths below the blue light wavelength to the blue light. When the particle diameter of the CdSe quantum dot is 5 nanometers, the CdSe quantum dot absorbs light with wavelengths below a green light wavelength, and converts the light with wavelengths below the green light wavelength to the green light. When the particle diameter of the CdSe quantum dot is close to 10 nanometers, the CdSe quantum dot absorbs light with wavelengths below a red light wavelength, and converts the light with wavelengths below the red light wavelength to the red light. In addition, a structure of the quantum dot can be composed of more than one semiconductor material. A shell of the quantum dot and a core of the quantum dot can be made of different materials respectively. The present invention utilizes the quantum dots with different particle sizes to generate light with different colors for improving illumination efficiency of a projector.

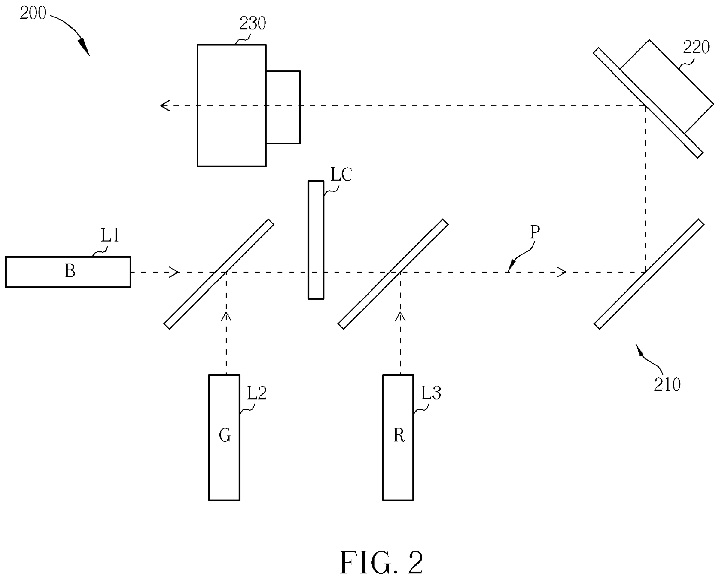

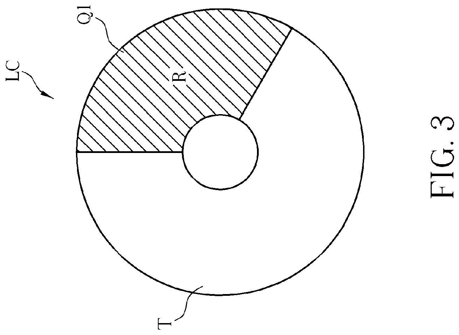

Please refer to FIG. 2 and FIG. 3. FIG. 2 is a diagram showing a comparative example of a projector. FIG. 3 is a diagram showing a light conversion element. The projector 200 comprises a first solid-state light source L1, a second solid-state light source L2, a third solid-state light source L3, a light conversion element LC, an optical module 210, an image generating element 220, and a projection module 230. The first solid-state light source L1 is for generating light with a first wavelength, such as blue (B) light with a wavelength around 450 nanometers. The second solid-state light source L2 is for generating light with a second wavelength, such as green (G) light with a wavelength around 550 nanometers. The third solid-state light source L3 is for generating light with a third wavelength, such as red (R) light with a wavelength around 650 nanometers. The light conversion element LC is disposed on a light path P. The light conversion element LC comprises a first quantum dot layer Q1 and a light transmission block T. The quantum dots on the first quantum dot layer Q1 are for converting light with wavelengths below 650 nanometers to the red light with wavelengths around 650 nanometers. The optical module 210 is for guiding the blue light, the green light, and the red light transmitted from the light conversion element LC to the image generating element 220 respectively. The image generating element 220 (such as a digital micromirror device) then generates blue images, green images, and red images according to the blue light, the green light, and the red light transmitted from the optical module 210 respectively. The projector 230 projects the blue images, the green images and the red images generated by the image generating element 220 onto a screen for forming complete images. Different from a fluorescent light source utilizing gas to emit light, the solid-state light source can be a laser, a light-emitting diode (LED), or an organic light-emitting diode (OLED), etc. The solid-state light source can emit light with a wavelength around a predetermined wavelength.

According to the above arrangement, when providing the blue light or green light to the image generating element 220 for generating the blue images or the green images, the light conversion element LC rotates to dispose the light transmission block T on the light path P, such that the blue light generated by the first solid-state light source L1 or the green light generated by the second solid-state light source L2 can pass through. When providing the red light to the image generating element 220 for generating the red images, the light conversion element LC rotates to dispose the first quantum dot layer Q1 on the light path P, and the first solid-state light source L1, the second solid-state light source L2, and the third solid-state light source L3 can emit light at the same time to let the first quantum dot layer Q1 of the light conversion element LC convert the blue light generated by the first solid-state light source L1 and the green light generated by the second solid-state light source L2 to the red light with a wavelength around 650 nanometers, such that energy of the red light passed through the light conversion element LC comprises energy of the original red, green, and blue light. Therefore, the brightness of the red light transmitted from the light conversion element LC is increased significantly.

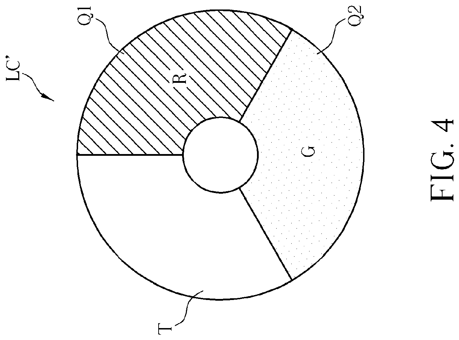

Please refer to FIG. 4, and refer to FIG. 2 as well. FIG. 4 is a diagram showing an embodiment of the light conversion element. The light conversion element LC of FIG. 2 can be replaced by a light conversion element LC' of FIG. 4. The light conversion element LC' comprises a first quantum dot layer Q1, a second quantum dot layer Q2, and a light transmission block T. The quantum dots on the first quantum dot layer Q1 are for converting light with wavelengths below 650 nanometers to the red light with a wavelength around 650 nanometers. The quantum dots on the second quantum dot layer Q2 are for converting light with wavelengths below 550 nanometers to the green light with a wavelength around 550 nanometers.

According to the above arrangement, when providing the blue light to the image generating element 220 for generating the blue images, the light conversion element LC' rotates to dispose the light transmission block T on the light path P, such that the blue light generated by the first solid-state light source L1 can pass through. When providing the green light to the image generating element 220 for generating the green images, the light conversion element LC' rotates to dispose the second quantum dot layer Q2 on the light path P, and the first solid-state light source L1 and the second solid-state light L2 can emit light at the same time to let the second quantum dot layer Q2 of the light conversion element LC' convert the blue light generated by the first solid-state light source L1 to the green light with a wavelength around 550 nanometers, such that energy of the green light passed through the light conversion element LC' comprises energy of the original green light and the blue light. Therefore, the brightness of the green light transmitted from the light conversion element LC' is increased significantly. Similarly, when providing the red light to the image generating element 220 for generating the red images, the light conversion element LC' rotates to dispose the first quantum dot layer Q1 on the light path P, and the first solid-state light source L1, the second solid-state light L2, and the third solid-state light L3 can emit light at the same time to let the first quantum dot layer Q1 of the light conversion element LC' convert the blue light generated by the first solid-state light source L1 and the green light generated by the second solid-state light source L2 to the red light with a wavelength around 650 nanometers, such that energy of the red light passed through the light conversion element LC' comprises energy of the original red, green, and blue light. Therefore, the brightness of the red light transmitted from the light conversion element LC' is increased significantly.

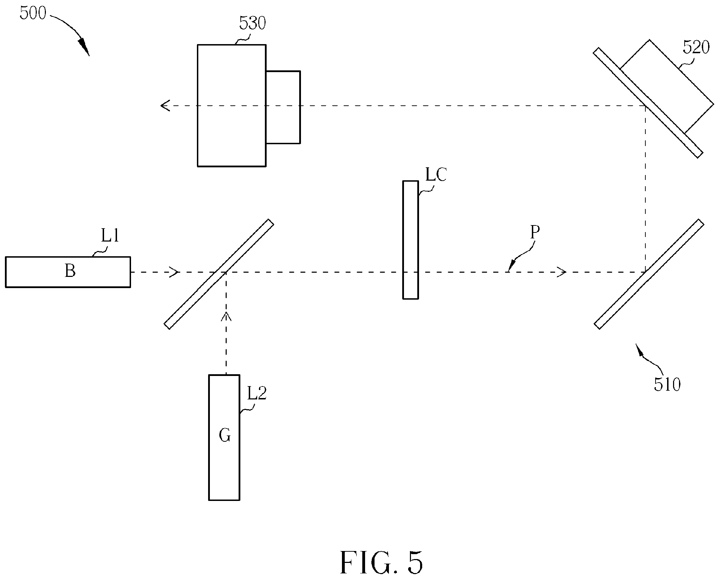

Please refer to FIG. 5. FIG. 5 is a diagram showing a second embodiment of the projector 500 of the present invention. The projector 500 comprises a first solid-state light source L1, a second solid-state light source L2, a light conversion element LC, an optical module 510, an image generating element 520, and a projection module 530. The first solid-state light source L1 is for generating blue light, and the second solid-state light source L2 is for generating green light. The light conversion element of the projector 500 is the light conversion element LC of FIG. 3. According to such an arrangement, the projector 500 can only comprise two solid-state light sources since the quantum dots on the first quantum dot layer Q1 of the light conversion element LC can convert the blue light generated by the first solid-state light source L1 and the green light generated by the second solid-state light source L2 to the red light. In addition, the light conversion element LC can be replaced by the light conversion element LC' of FIG. 4. According to such an arrangement, the quantum dots on the first quantum dot layer Q1 of the light conversion element LC' can convert the blue light generated by the first solid-state light source L1 and the green light generated by the second solid-state light source L2 to the red light, and the quantum dots on the second quantum dot layer Q2 can convert the blue light generated by the first solid-state light source L1 to the green light. Therefore, the above arrangements not only increase the brightness of the red light and the green light, but also simplify the structure of the projector.

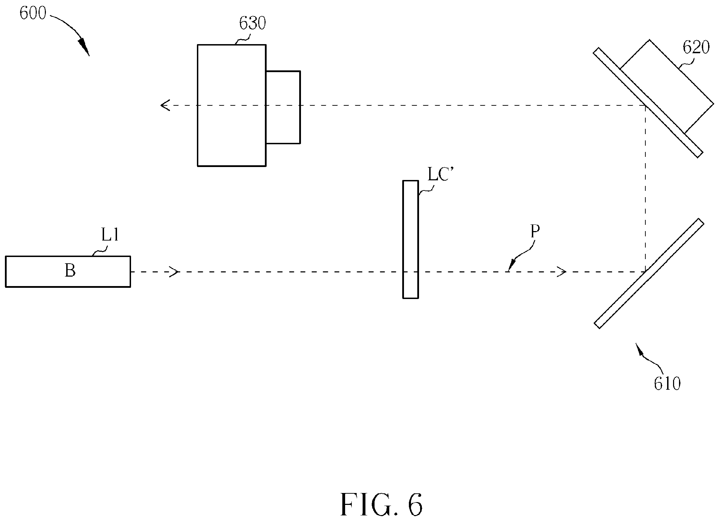

Please refer to FIG. 6, and refer to FIG. 4 as well. FIG. 6 is a diagram showing a comparative example of the projector 600 of the present invention. The projector 600 comprises a first solid-state light source L1, a light conversion element LC', an optical module 610, an image generating element 620, and a projection module 630. The first solid-state light source L1 is for generating blue light. The light conversion element of the projector 600 is the light conversion element LC' of FIG. 4. According to the above arrangement, the quantum dots on the first quantum dot layer Q1 of the light conversion element LC' can convert the blue light generated by the first solid-state light source L1 to the red light, and the quantum dots on the second quantum dot layer Q2 of the light conversion element LC' can convert the blue light generated by the first solid-state light source L1 to the green light. Therefore, the projector 600 can only comprise one solid-state light source, which significantly simplifies the structure of the projector.

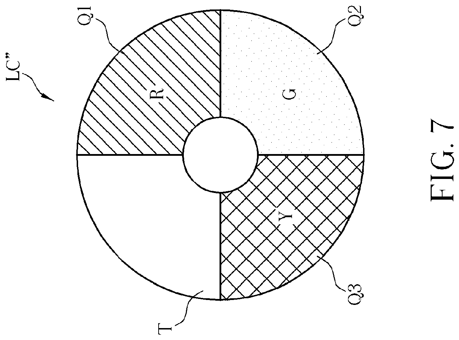

In addition, please refer to FIG. 7. FIG. 7 is a diagram showing a third embodiment of the light conversion element. As shown in FIG. 7, the light conversion element LC" can further comprise a third quantum dot layer Q3 (or more quantum dot layers) for generating light with a fourth color, such as yellow Y. Therefore, images generated by the projector can be more colorful.

The above embodiments are only for illustrating operation of the projector of the present invention. The quantity and the colors of the quantum dot layers of the light conversion element of the present invention can be determined according to design requirements. And, the light conversion element can also be disposed at other positions along the light path according to design requirements. Besides converting light passing through the light conversion element to light with a predetermined wavelength, the light conversion element can also convert light reflecting from the light conversion element to light with a predetermined wavelength.

In addition, the present invention can be also utilized in other types of image generating devices, such as a rear projection television or a liquid crystal display device. The image generating device of the present invention can utilize the light conversion element and the corresponding solid-state light source to generate light with different colors, and further generates color images.

In contrast to the prior art, the image generating device of the present invention utilizes quantum dots to absorb light with different wavelengths and converts the light to light with a predetermined wavelength, such that the illumination efficiency of each color is increased, and the brightness of images is increased as well. Moreover, the projector of the present invention can also reduce the quantity of the solid-state light sources in order to simplify the structure of the solid-state lighting projector.

## Claims

1. An image generating device (600) with improved illumination efficiency comprising:
a first light source (L1) for generating light with a first wavelength; a second light source (L2) for generating light with a second wavelength, wherein the image generating device (600) is configured to cause the first and second light sources to generate light at the same time;
a light conversion element disposed on a light path of the light with the first wavelength and the light with the second wavelength, **characterized in that** the light conversion element comprises :
a first quantum dot layer (Q2) arranged at a first area of the light conversion element for converting light with wavelengths under then second wavelength to light with the second wavelength; and
a second quantum dot layer (Q1) arranged at a second area of the light conversion element for converting light with wavelengths under a third wavelength to light with the third wavelength;
a light transmission block (T) arranged at a third area of the light conversion element for allowing light generated by the first light source to pass through;
wherein the light conversion element is configured to rotate for respectively disposing the first quantum dot layer, the second quantum dot layer, and the light transmission block on the light in sequence;
wherein the first wavelength is smaller than the second wavelength, and the second wavelength is smaller than the third wavelength; and further comprising an image generating element (620) for generating red, green and blue images according to the light transmitted from the light conversion element to form complete images by the red, green and blue images.

2. The image generating device of claim 1, **characterized in that** the light with the first wavelength is blue light, the light with the second wavelength is green light, and the light with the third wavelength is red light.

3. The image generating device of claim 2, further **characterized by** a third light source for generating light with the third wavelength.

4. The image generating device of claim 1, further **characterized by** a projection module (630) for projecting the images generated by the image generating element (620).

## Patentansprüche

1. Bild-erzeugendes Gerät (600), mit verbesserter Illuminations-Effizienz, das umfasst:
eine erste Lichtquelle (L1) zum Erzeugen von Licht mit einer ersten Wellenlänge;
eine zweite Lichtquelle (L2) zum Erzeugen von Licht mit einer zweiten Wellenlänge, worin das Bild erzeugende Gerät (600) ausgestaltet ist, zu bewirken, dass die erste und zweite Lichtquelle zur gleichen Zeit Licht erzeugen;
ein Lichtumwandlungs-Element, das auf einem Strahlengang des Lichtes der ersten Wellenlänge und des Lichtes der zweiten Wellenlänge angeordnet ist, **dadurch gekennzeichnet, dass** das Lichtumwandlungs-Element umfasst:
eine erste Quantenpunktschicht (Q2), die an einer ersten Fläche des Lichtumwandlungs-Elementes angebracht ist, um Licht mit Wellenlängen unter einer zweiten Wellenlänge zu Licht mit der zweiten Wellenlänge umzuwandeln; und
eine zweite Quantenpunktschicht (Q1), die an einer zweiten Fläche des Lichtumwandlungs-Elementes angebracht ist, um Licht mit Wellenlängen unter einer dritten Wellenlänge zu Licht mit der dritten Wellenlänge umwandeln;
einen Lichtübertragungs-Block (T), der an einer dritten Fläche des Lichtumwandlungs-Elementes angebracht ist, um dem durch die erste Lichtquelle erzeugten Licht zu ermöglichen, hindurch zu gehen;
worin das Lichtumwandlungs-Element ausgestaltet ist, sich zu drehen, um jeweils die erste Quantenpunktschicht, die zweite Quantenpunktschicht, und den Lichtübertragungs-Block nacheinander auf das Licht auszurichten;
worin die erste Wellenlänge kleiner ist als die zweite Wellenlänge, und die zweite Wellenlänge kleiner ist als die dritte Wellenlänge; und worin es weiter umfasst
ein Bild-erzeugendes Element (620) zum Erzeugen roter, grüner und blauer Bilder entsprechend dem von dem Lichtumwandlungs-Element übertragenen Licht, um vollständige Bilder durch die roten, grünen und blauen Bilder auszubilden.

2. Bild-erzeugendes Gerät nach Anspruch 1, **dadurch gekennzeichnet, dass** das Licht mit der ersten Wellenlänge blaues Licht ist, das Licht mit der zweiten Wellenlänge grünes Licht ist, und das Licht mit der dritten Wellenlänge rotes Licht ist.

3. Bild-erzeugendes Gerät nach Anspruch 2, weiter **gekennzeichnet durch** eine dritte Lichtquelle zum Erzeugen von Licht mit der dritten Wellenlänge.

4. Bild-erzeugendes Gerät nach Anspruch 1, weiter **gekennzeichnet durch** ein Projektionsmodul (630) zum Projizieren der durch das Bild-erzeugende Element (620) erzeugten Bilder.

## Revendications

1. Dispositif de génération d'images (600) présentant une efficacité d'éclairage améliorée comprenant ;
une première source de lumière (L1) pour générer de la lumière ayant une première longueur d'onde ; une deuxième source de lumière (L2) pour générer de la lumière ayant une deuxième longueur d'onde, le dispositif de génération d'images (600) étant conçu pour amener les première et deuxième sources de lumière à générer de la lumière en même temps ;
un élément de conversion de lumière disposé sur un trajet lumineux de la lumière ayant la première longueur d'onde et de la lumière ayant la deuxième longueur d'onde, **caractérisé en ce que** l'élément de conversion de lumière comprend :
une première couche de points quantiques (Q2) agencée au niveau d'une première zone de l'élément de conversion de lumière pour convertir la lumière ayant des longueurs d'onde inférieure à la deuxième longueur d'onde en une lumière ayant la deuxième longueur d'onde ; et
une deuxième couche de points quantiques (Q1) agencée au niveau d'une deuxième zone de l'élément de conversion de lumière pour convertir la lumière ayant des longueurs d'onde inférieure à une troisième longueur d'onde en une lumière ayant la troisième longueur d'onde ;
un bloc de transmission de lumière (T) agencé au niveau d'une troisième zone de l'élément de conversion de lumière pour permettre le passage de la lumière générée par la première source de lumière à travers celui-ci ;
l'élément de conversion de lumière étant conçu pour tourner afin de disposer séquentiellement, respectivement, la première couche de points quantiques, la deuxième couche de points quantiques, et le bloc de transmission de lumière sur la lumière ;
la première longueur d'onde étant plus petite que la deuxième longueur d'onde et la deuxième longueur d'onde étant plus petite que la troisième longueur d'onde ; et
comprenant en outre un élément de génération d'images (620) pour générer des images rouges, vertes et bleues en fonction de la lumière transmise par l'élément de conversion de lumière pour former des images complètes par les images rouges, vertes et bleues.

2. Dispositif de génération d'images selon la revendication 1, **caractérisé en ce que** la lumière ayant la première longueur d'onde est la lumière bleue, la lumière ayant la deuxième longueur d'onde est la lumière verte et la lumière ayant la troisième longueur d'onde est la lumière rouge.

3. Dispositif de génération d'images selon la revendication 2, **caractérisé en outre par** une troisième source de lumière pour générer de la lumière ayant la troisième longueur d'onde.

4. Dispositif de génération d'images selon la revendication 1, **caractérisé en outre par** un module de projection (630) pour projeter les images générées par l'élément de génération d'images (620).
